# EUROPEAN PATENT SPECIFICATION

(11) **EP 2 119 640 B1**
(45) Date of publication and mention of the grant of the patent: **18.12.2013**
(21) Application number: 09165536.5
(22) Date of filing: 29.04.2009
(51) Int. Cl.: B65D 85/804

(54) **Napolitana coffee making system**
System für Kaffeezubereitung auf napoletanische Art
Système napolitain de fabrication de café

(30) Priority: 29.04.2008 NL 2001539
(43) Date of publication of application: 18.11.2009
(62) Divisional of application: 09159107.3
(73) Proprietor: Koninklijke Douwe Egberts B.V., 3532 AD Utrecht (NL)
(72) Inventor: Tsang, Ka Cheung, 3521 DA, Utrecht (NL)
(74) Representative: Hatzmann, Martin

(56) References cited:
- EP-A- 0 521 186
- EP-A- 0 631 948
- EP-A- 0 838 186
- GB-A- 1 119 891
- US-A1- 2006 249 035

## Description

The invention relates to a system according to the pre-characterizing portion of claim 1. The invention also relates to a method according to the pre-characterizing portion of claim 26.

The Napolitana coffee maker is also known under the name of "Mokka-Express".

Such a system and method for preparing a coffee beverage are known from US 2006/0249035. In this known system and method the coffee capsule is a coffee pack well known in the market and contains coffee powder of specific flavor, which is covered by cotton paper or non-woven fabric, and is provided with a complex outer film.

In known system, for preparing coffee extract, the second chamber is opened by a user to introduce an amount of loose ground coffee, determined by the user, into the second chamber. There are appliances for receiving different maximum amounts of ground coffee, which maximum amounts are respectively intended for preparing three cups, six cups or nine cups of coffee extract. A cup of coffee in this application is understood to mean in particular 30-60 ml of coffee extract with 2-4% of dry matter. The ground coffee, in use, is loosely present in this chamber. Thereupon the second chamber is closed off with the aid of the exit filter. Also, the user fills the first chamber with an amount of water determined by him. After this, the Napolitana coffee maker is ready for use. In use, the water that is present in the chamber is heated. This can for instance be done by placing the Napolitana coffee maker on a cooking apparatus, whereby the first chamber is heated with the aid of an electric heating element and/or a flame. Naturally, it is also possible that in the first chamber a heating element is arranged to heat the water. As a result of the water being heated, the pressure in the first chamber wiU proceed to rise. This will especially be a consequence of the increased temperature of air and liquid vapor present above a liquid surface within this chamber. A result of this pressure rise is that the hot water is pressed into the first riser in the direction of the entrance filter. The water will thereupon pass the entrance filter and come into contact with the loose coffee present in the second chamber. As a result, a coffee extract is formed. This coffee extract will be pressed in the direction of the exit filter as a result of the rising pressure in the first chamber. Thereupon the coffee extract will leave the exit filter and flow via the fluid connection into the third chamber. The entrance filter and the exit filter here cause the ground coffee itself to remain in the second chamber. In some cases the first chamber is further provided with a safety valve via which air can be discharged from the first chamber in case of excess high pressure buildup. Water vapor, however, cannot flow to the outside via the valve under normal operating pressure, because otherwise the desired pressure in the first chamber might fall upon the heating of the water in the first chamber. When at least substantially all water has flowed from the first chamber through the coffee bed in the second chamber, thereby forming coffee extract, to the third chamber, the brewing process is completed. Thereupon a user can consume the coffee extract. In general, at least three cups will have been prepared then.

It is known that there are Napolitana coffee makers that are suitable for preparing at most six cups of coffee. It is also known that within the category of Napolitana coffee makers suitable for preparing at most six cups of coffee, there are different types of Napolitana coffee makers where, depending on the type within this category, a length of the second space in a direction from the entrance filter to the exit filter can vary by 5.4 mm. In absolute terms, a length may for instance vary from 25-30.4 mm. Entirely analogously, it holds for the known category of Napolitana coffee makers suitable to make at most nine cups of coffee, that within this category there are different types of Napolitana coffee makers where, depending on the type within this category, a length of the second space in a direction from the entrance filter to the exit filter can vary by 6.1 mm. Furthermore, it holds for the known Napolitana coffee makers suitable to make three cups of coffee, that within this category there are different types of Napolitana coffee makers where, depending on the type within this category, a length of the second space in a direction from the entrance filter to the exit filter can vary by 2.4 mm.

One object of the invention is to provide a system whereby the use of a Napolitana coffee maker is facilitated. Another object is to afford the consumer the possibility of preparing a coffee extract of constant quality and preferably of high quality. In the system known from US 2006/0249035 the coffee maker is adapted to use the prior art coffee pack. The system according to the invention is characterized by the characterizing portion of claim 1. As use can be made of a coffee capsule, convenience for the user is improved. The user does not need to bother to measure a desired amount of coffee, which is accompanied by spillage of coffee over the edge of the second chamber. Also, in this way a predetermined quality of the ground coffee can be guaranteed for the user. Further, the coffee capsule can easily be removed from the second chamber after use. This in contrast to a second chamber where the used coffee is loosely present. This can take a user relatively much trouble.

As the distance between the bottom and the top wall of the coffee capsule can be reduced, what is achieved is that the consumer does not need to worry about what the respective length of the second space in his Napolitana coffee maker is. As the distance between the top wall and the bottom of the coffee capsule before it is placed in the Napolitana coffee maker is greater than a length of the second space, the coffee capsule can always be placed in the second chamber with a clamped fit. Here, in use, entirely analogously to what has been described above, the water in the first chamber will be heated. The water rises up through the riser and will be pressed via the entrance filter into the second chamber. As a result of the sealing mentioned, the water can continue on its way at least substantially exclusively by flowing via the entrance filter into the coffee space within the coffee capsule. As a result, again, extract is formed. This extract will, under the influence of the water pressure, leave the coffee space via the outlet filter and leave the second chamber via the exit filter and flow via the fluid connection mentioned to the third space.

As the distance between the top wall and the bottom of the coffee capsule before it is placed in the Napolitana coffee maker can be reduced, a consumer does not need to worry about the actual magnitude of that distance of his Napolitana coffee maker. If he knows, for instance, that he has a Napolitana coffee maker for preparing at most six cups, he only needs to use a coffee capsule in which an amount of coffee is contained for preparing for instance six cups of coffee. Within this category of Napolitana coffee makers, the respective coffee capsule can always be used for the different types of Napolitana coffee makers because, as set out hereinabove, the distance mentioned can be reduced through clamping. Entirely analogously, this also holds for the category of Napolitana coffee makers for at most nine cups. The user only needs to use a coffee capsule in which an amount of coffee is contained for preparing for instance nine cups of coffee. Within this category of Napolitana coffee makers the respective coffee capsule can always be used for the different types of Napolitana coffee makers because, as set out hereinabove, the distance mentioned can be reduced through clamping. Entirely analogously, this also holds for the category of Napolitana coffee makers for at most three cups. The user only needs to use a coffee capsule in which an amount of coffee is contained for preparing for instance three cups of coffee. Within this category of Napolitana coffee makers the respective coffee capsule can always be used for the different types of Napolitana coffee makers because, as set out hereinabove, the distance mentioned can be reduced through clamping.

In particular, it holds here that the Napolitana coffee maker is provided with a sealing ring between a part of the Napolitana coffee maker that is connected with the exit filter of the Napolitana coffee maker and the coffee holder.

Furthermore, it holds here in particular that the coffee capsule sealingly abuts against the sealing ring for obtaining the fluid sealing mentioned.

More particularly, it holds here that the top wall of the coffee capsule sealingly abuts against the sealing ring for obtaining the fluid sealing mentioned.

In this way, therefore, use can be made of the sealing ring already present for obtaining a sealing between the above-mentioned part of the Napolitana coffee maker and the coffee holder to also obtain a sealing between that part of the Napolitana coffee maker and the coffee capsule. As the coffee capsule is clamped, it can then be accomplished that the coffee capsule forms a good sealing with the sealing ring. The clamping then has a twin function: on the one hand it is achieved that the coffee capsule, in use, can be made to fit into the second chamber and on the other hand, as a result of the clamping, the fluid sealing is obtained. It holds, accordingly, that the fluid sealing is formed with the aid of a sealing ring of the Napolitana coffee maker, which sealing ring forms a fluid sealing between a part of the Napolitana coffee maker that is connected with the exit filter of the Napolitana coffee maker and the coffee holder, so that a liquid which flows via the entrance filter into the second chamber can leave the second chamber only via the exit filter, both when no coffee capsule is situated in the second chamber and also when there is a coffee capsule in the second chamber.

It is also possible, however, that the coffee capsule is provided with a sealing ring for obtaining the fluid sealing.

The coffee space before the coffee capsule is placed in the second space of the Napolitana coffee maker is only for a part filled with the ground coffee so that the distance between the top wall and bottom of the coffee capsule and hence the volume of the coffee space can be reduced for placing the coffee capsule in the second space.

In this way, it is accomplished that the above-mentioned distance of the coffee capsule can be reduced to make it fit into the second space.

The upstanding sidewall of the coffee capsule is provided with at least one weakened zone so that through deformation of the weakened zone said distance can decrease, wherein, preferably, the weakened zone is provided with a fold closed upon itself which extends in a plane which is substantially parallel to the bottom of the coffee capsule so that said distance can decrease when the upstanding sidewall folds up around the at least one fold.

In particular, it holds here that the upstanding sidewall is manufactured from a plastic as polypropylene or polyethylene.

By making use of such a plastic, it can fold up somewhat resiliently so that the earlier-mentioned clamping is realized.

In particular, it holds that the bottom is provided with multiple openings, while on an inside and/or outside of the bottom a first sheet of filtering material covers the openings. Here, it furthermore holds, in particular, that the top wall is provided with multiple openings while on an inside and/or outside of the top wall a second sheet of filtering material covers the openings.

In this way, it is realized that on the one hand the capsule feels rigid and on the other hand the ground coffee cannot escape via the openings in the top and/or bottom wall of the capsule. In particular, it holds that the upstanding sidewall and/or the bottom wall is manufactured from a plastic such as polypropylene or polyethylene.

Both for the first sheet and for the second sheet, it holds that they may be manufactured from filtering paper. The inlet filter and/or outlet filter may also be formed by just a sheet of filtering material such as filtering paper or by the bottom and/or the top wall which is provided with a number of openings without a sheet of filtering material.

In order that a coffee capsule which is filled with an amount of coffee which is intended to make a predetermined quantity of cups of coffee can be used in a Napolitana coffee maker intended for that purpose, it preferably holds that the coffee capsule is so arranged that said distance can decrease to at least 7/8 and in particular to at least 3/4 of the original distance without the coffee capsule being broken. In this way, it is accomplished that the coffee capsule can work within the range of second chamber lengths that are used for the respective category of Napolitana coffee makers.

In particular, it holds that the system is provided with at least a first type of Napolitana coffee maker and at least a second type of Napolitana coffee maker which, for instance, are each arranged to receive a maximum amount of ground coffee for preparing a same number of cups of coffee, wherein the length of the second space of the first type of Napolitana coffee maker is greater than the length of the second space of the second type of Napolitana coffee maker, wherein the coffee capsule can both be clampingly received in the second space of the first type of Napolitana coffee maker and be clampingly received in the second space of the second type of Napolitana coffee maker.

The method according to the invention is characterized by the characterizing portion of claim 26.

EP 0521186 discloses a capsule in the shape of a frustum or inverted frustum which would be made of a flexible materials, which would retain its shape, particularly during extraction, so that extraction would take place correctly by passage of the extraction fluid, without preferential flow pats through the layer of powder-form substance, and which would be able to be extracted in fluid-tight manner in conventional espresso machines without adapter. The body of the capsule is deformable or extendable to allow exact adaptation to various extraction systems.

EP 631948 discloses an Italian coffee maker provided with a filterbag included a first piece of filterpaper being formed into a central cylindrical pocket and a second piece of planar circular filterpaper sealed to the first piece filterpaper. It is neither disclosed in US 2006/0249035 nor in EP0631848 that the distance between the top wall and the bottom of the coffee capsule before it is placed in the Napolitana coffee maker is greater than a length of the second space in a direction from the entrance filter of the Napolitana coffee maker to the exit filter of the Napolitana coffee maker so that, when, in use, the coffee capsule is introduced into the second chamber and when the second chamber is thereupon closed, the coffee capsule is clamped in the coffee holder between the entrance filter and the exit filter of the Napolitana coffee maker while the distance between the top wall and the bottom of the coffee capsule will thereby decrease.

The invention will be further elucidated on the basis of the drawing. In the drawling:
Fig. 1 shows in transparent view a Napolitana coffee maker, known per se;
Fig. 2 shows a first embodiment of a system according to the invention provided with the Napolitana coffee maker according to Fig. 1 with a first embodiment of a coffee capsule according to the invention included therein;
Fig. 3a shows a first elevational view of the coffee capsule shown in Fig. 2;
Fig. 3b shows a bottom view of the coffee capsule shown in Fig. 3a;
Fig. 3c shows a top plan view of the coffee capsule according to Fig. 3a;
Fig. 3d shows a cross section of the coffee capsule according to Fig. 3a;
Fig. 4 shows the coffee holder with the coffee capsule of the system according to Fig. 2 included therein;
Fig. 5a shows the coffee capsule according to Fig. 3a when received in a Napolitana coffee maker the length of whose second chamber is equal to L1;
Fig. 5b shows the coffee capsule according to Fig. 3a when received in a Napolitana coffee maker the length of whose second chamber is equal to L2;
Fig. 5c shows the coffee capsule according to Fig. 3a when received in a Napolitana coffee maker the length of whose second chamber is equal to L3;
Fig. 6 shows a second embodiment of a coffee capsule according to the invention;
Fig. 7 shows a part of a system according to the invention that is provided with a part of a third embodiment of a coffee capsule according to the invention.

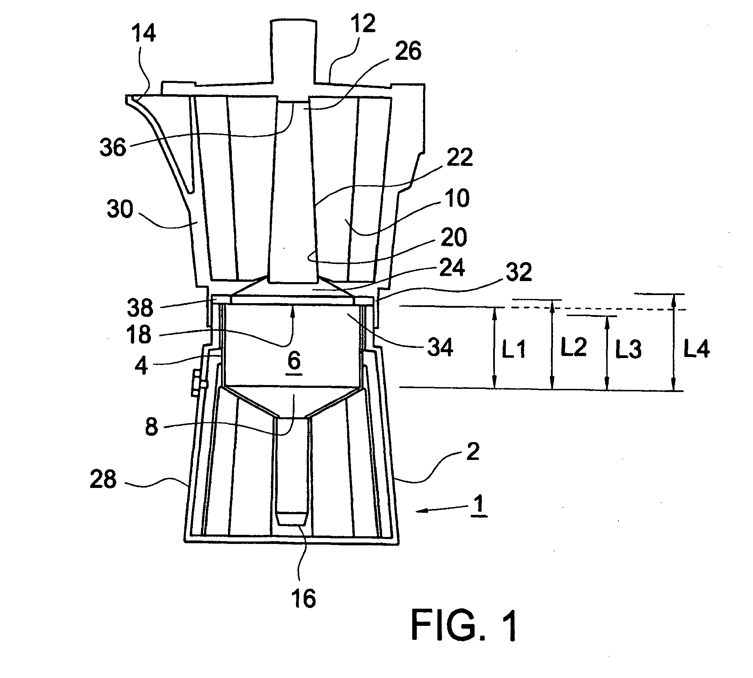

In Fig. 1, a Napolitana coffee maker is designated with reference numeral 1. The coffee maker 1 is provided with a first chamber 2 for receiving water. Furthermore, the coffee maker 1 is provided with a coffee holder 4 with a second chamber 6 for receiving an amount of ground coffee. In the second chamber a maximum amount of ground coffee can be received which is intended for preparing six cups of coffee. The coffee holder is further provided with an entrance filter 8 which forms a barrier to the ground coffee and which can pass a liquid. The coffee maker 1 is further provided with a third chamber 10 for receiving the coffee extract. The third chamber 10 in this example is closed off with a cover 12 and is furthermore provided with a spout 14. The coffee maker is further provided with a first riser 16 for supplying hot water from the first chamber via the entrance filter 8 to the second chamber 6. Furthermore, the coffee maker is provided with an exit filter 18 which forms a barrier to the ground coffee and which can pass a liquid. In use, the second chamber is closed off with the aid of the exit filter 18. Furthermore, the coffee maker is provided with a fluid connection 20 which extends from the second chamber 6 to the third chamber 10 and which includes the exit filter 18, for supplying the coffee extract from the second chamber via the exit filter to the third chamber. The fluid connection 20 in this example comprises a second riser 22 which extends from a fourth chamber 24, situated on the outlet side of the exit filter 18, into the third chamber and to near an upper side 26 of the third chamber. The coffee maker is provided with a first partial housing 28 and a second partial housing 30 which are detachably connected with each other, in this example through a threaded connection 32. The first partial housing in this example comprises the first chamber. If the first partial housing is unscrewed from the second partial housing, the coffee holder 4 and the riser 16, which are connected with each other in this example, can be taken out of the first partial housing. In this example, the third chamber 10, the fourth chamber 24 and the second riser 22 are in the second partial housing 30. The exit filter 18 is connected with the second partial housing.

For preparing coffee, the first and second partial housings are unscrewed from each other. Thereupon the coffee holder with the first riser 16 fixedly attached thereto is removed from the first partial housing. After this, the first chamber can be filled with water via the open top 34 of the first partial housing 28. Also, the second chamber can be filled with an amount of ground coffee, for instance in this example for six cups. In this example, this is also the maximum amount of coffee that can be received in the second chamber and which maximum amount is intended for preparing six cups. Thereupon the coffee holder is re-placed in the first partial housing and thus is in fact situated in the first chamber 2. After this, the second partial housing 30 is screwed onto the first partial housing 28. Thereupon, the water present in the first chamber will be heated. This can for instance be carried out by positioning the coffee maker on a hot plate. In this example all parts of the coffee maker are manufactured from a metal. When the water is heated, the pressure in the first chamber will rise. This rise of the pressure is especially caused by air and water vapor present in the first chamber above the liquid surface. Under the influence of the increased pressure, the water will be forced into the riser and proceed to rise in the direction of the entrance filter 8. Thereupon, the water will flow via the entrance filter 8 into the second chamber. The water will be pressed through the ground coffee present in the second chamber, in the direction of the exit filter 18. As a result, coffee extract will be formed. The coffee extract is thereupon pressed through the exit filter 18 so that it ends up in the fourth chamber 24. From the fourth chamber, it is forced further upwards through the second riser 22 to flow at an open top 36 of the second riser into the third chamber 10. This process will continue until at least substantially all water from the first chamber has been pressed through the second chamber so that a coffee extract is formed, which coffee extract eventually ends up in the third chamber. In the third chamber, there is presently a beverage which is ready for consumption. In this example, this involves six cups of coffee. These cups of coffee can be poured from the spout 14.

The coffee maker is further provided with a sealing ring 38 which is fixedly connected with the second partial housing 30 and which forms a sealing with a top of the coffee holder 4. The result is that coffee extract can leave the second chamber 6 only via the exit filter 18 in order to reach the fourth chamber. The coffee extract hence cannot seep away via, for instance, the threaded connection 32. As can be properly seen in Fig. 1, the rubber ring 38 has a width such that, viewed in radial direction of the coffee maker, it extends to a point within the contours of the second chamber. This is important because a coffee capsule according to the invention in a system according to the invention can make use of this in a particular embodiment, as will be set out hereinafter in more detail.

In this example, it thus holds that the Napolitana coffee maker is provided with a sealing ring 38 which is situated between a part of the Napolitana coffee maker that is connected with the exit filter (in this example the second partial housing 30) and the coffee holder 4.

As mentioned, in this example a coffee maker is described which is intended to make at most six cups. In this example a length 11 of the second chamber in the direction from the entrance filter 8 to the exit filter 18, that is, in this example, a height 11 = 28 mm. However, there are also other types of Napolitana coffee makers known within the category for preparing at most six cups of coffee. Also known, for instance, are types where the height of the second chamber equals 12 = 31.2 mm. Further known within this category are types of coffee makers where the height equals 13 = 25.8 mm.

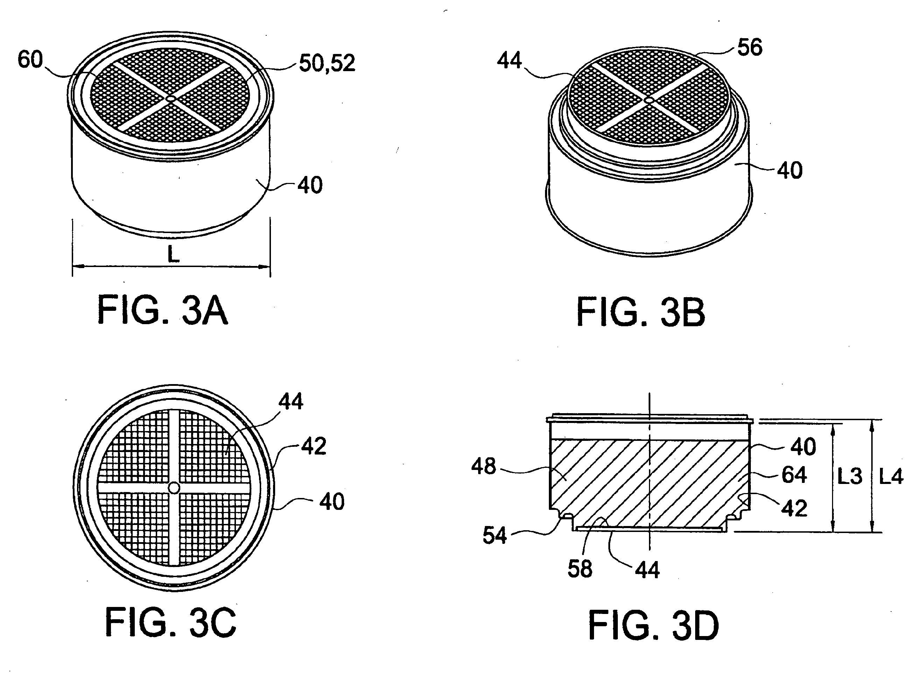

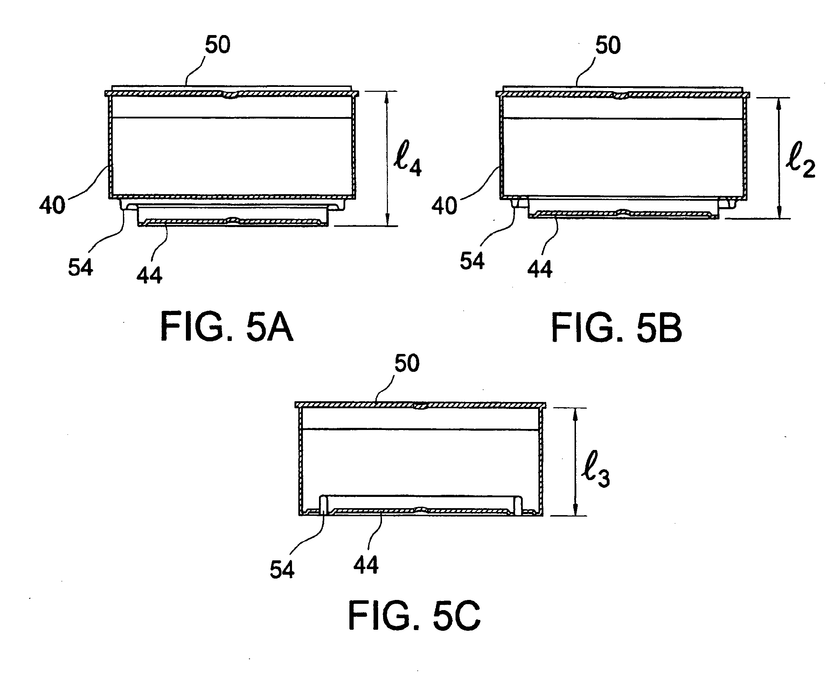

In Figs. 3a-3d, there is shown a coffee capsule for preparing six cups of coffee in a Napolitana coffee maker. The coffee capsule 40 is provided with an upstanding sidewall 42, a bottom 44 which is provided with an inlet filter 46 which forms a barrier to the ground coffee 48 included in the coffee capsule and can pass a liquid. The coffee capsule 40 is further provided with a top wall 50 which is provided with an outlet filter 52 which forms a barrier to the ground coffee 48 and can pass a liquid. The coffee capsule has a distance h between the bottom and the top wall, that is, in this example, a height h which is equal to 14=31.2 mm (see Fig. 1 and Fig. 3d). The upstanding sidewall of the coffee capsule is provided with a weakened zone 54 so that through a deformation of the weakened zone the above-mentioned distance L4 can decrease when the bottom 44 and the top wall 50 are pushed towards each other. In this example, the weakened zone comprises at least one fold 54 closed upon itself, which extends in a plane which is substantially parallel to the bottom 44 of the coffee capsule, so that the distance L4 can decrease when the upstanding sidewall 42 folds up around the at least one fold. This folding can occur when the bottom 44 and the top wall 50 are pushed towards each other. In Fig. 5a the situation is shown where the bottom 44 and the top wall 50 have not been pressed towards each other yet. So this is the situation before the coffee capsule is used. The height of the coffee capsule, that is, the distance between the outside of the top wall and the outside of the bottom is equal to 14=31.2 mm. In Fig. 5b the situation is shown in which the bottom 44 and the top wall 50 have been pushed slightly towards each other, so that the height, that is, the distance between the outside of the upper edge and the outside of the bottom is 12, with 12=30mm. Thereby, as a result of the decreased distance between the bottom and the top wall, the sidewall has deformed slightly and folded up around the fold 54. In Fig. 5c, the situation is shown where the bottom 44 and the top wall 50 have been pushed towards each other still further. The height of the coffee capsule is then 13=25.8 mm. The sidewall has thereby deformed still further around the fold 54. Furthermore, it holds in this example that the upstanding sidewall of the coffee capsule abuts at least substantially against an inner wall of the second chamber.

In this example, the bottom is provided with a multiplicity of openings 56, while on an inside of the bottom a first filter material 58, in this example filtering paper, is arranged which covers the openings 56. The filtering paper 58 together with the openings 56 constitutes the inlet filter 46. The top wall 50 is also provided with a multiplicity of openings 60, while on an inside of the top wall a second sheet of filter material, in this example filtering paper 62, is arranged which covers the openings 60. The openings 60, together with the second sheet of filtering paper 62, constitute the outlet filter 52.

In this example, it holds that the bottom, the upstanding sidewall and top wall are each manufactured from a plastic, in this example polypropylene. The upstanding sidewall is hence manufactured from a rigid or semirigid material.

Furthermore, it holds that in this example in an inner space 64 of the coffee capsule, which will hereinafter be referred to as coffee space 64, an amount of coffee is included which is approximately equal to 23 grams. This is an amount which is intended for preparing approximately six cups of coffee. It then holds in this example that the amount of ground coffee included in the coffee capsule is approximately equal to the maximum amount that can be received in the second chamber. In the situation as shown in Fig. 5a, it holds that the coffee space 64 has a greater volume than the volume of the ground coffee. The coffee space is hence not completely filled with coffee. It has thus been rendered possible for the height h of the coffee capsule to be reduced, as has been set out in the situations according to Figs. 5b and 5c. In particular, it holds here that the coffee capsule is so arranged that the height h can decrease to at least 7/8 of the original distance without the coffee capsule being broken. If the coffee capsule is filled with less ground coffee for preparing, for instance, two cups of coffee, the coffee capsule can retain the same dimensions. It is also conceivable that the coffee capsule, for instance, obtains a smaller diameter near its underside.

The coffee capsule can now be used in a Napolitana coffee maker of the category for preparing at most six cups of coffee, as follows. A type of Napolitana coffee maker within this category is shown in Fig. 1. In use, at the Napolitana coffee maker according to Fig. 1, the first partial housing 28 is unscrewed from the second partial housing 30.

When the first partial housing and the second partial housing have been separated from each other, the coffee holder with the riser is taken from the first partial housing. Thereupon the first chamber 2 is filled with water. After this, the coffee holder 4 with the first riser 16 is re-placed in the first partial housing 28.

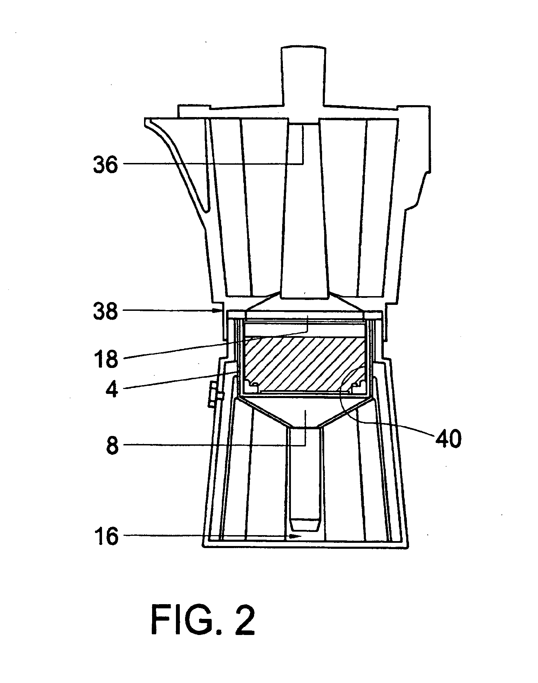

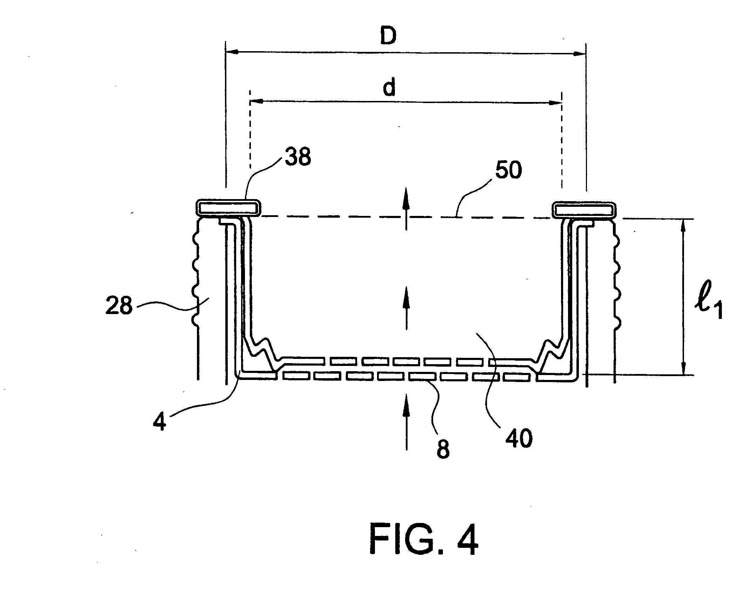

Next, the coffee capsule according to Fig. 3a is placed in the second chamber 6. Since the height of the second chamber is equal to 11, while the height of the coffee capsule is equal to 14, the coffee capsule will project slightly above the second chamber. Thereupon, however, the first and second partial housings are screwed together again. As a result, the coffee capsule will be clamped between the entrance filter 8 and the exit filter 18. The top wall 50 of the coffee capsule will thereby come to lie against the sealing ring 38, as shown in Fig. 4. Also, as the first and the second partial housings are being screwed together, the bottom and the top wall of the coffee capsule will be pressed towards each other until they give the capsule a height as shown in Fig. 4, which height is equal to 11=28 mm. So, here a situation is involved where the coffee capsule is in a position which is in-between the positions of Figs. 5b and 5c. As the original height of the coffee capsule is 14, in this way this capsule can always be made to fit in the second chamber 6, with the top wall 50 of the coffee capsule coming to lie sealingly against the inner ring 38. It is noted that this same situation can be obtained if the Napolitana coffee maker had a second chamber of a height 12 or a height 13. In all cases, the coffee capsule, starting from a height 14, can be compressed until it fits into the second chamber and whereby, moreover, at the same time a sealing is obtained between the top wall 50 and the sealing ring 38. Thus a situation is obtained as shown in Fig. 2 and Fig. 4. The sealing referred to is hence a result of the clamping referred to. The clamping is hence caused by the deformation of the upstanding sidewall. This upstanding sidewall tends to counteract this deformation and hence generates a reaction force which causes the clamping. The folding up of the upstanding sidewall around the fold 54 is somewhat resilient and so, in response to the top wall and the bottom being pushed towards each other, generates a reaction force which brings about the clamping referred to.

The system according to Fig. 2 which is provided with a Napolitana coffee maker according to Fig. 1 and the coffee capsule according to Fig. 3 placed therein is presently ready for use. In use, the water in the first chamber 2 is heated as has been discussed with reference to Fig. 1. After some time, this water will proceed to rise up into the riser 16 in the direction of the entrance filter 8. The water will thereupon pass the entrance filter 8 and end up in the second chamber. The water proceeds to look for the path of least resistance and, doing so, cannot leave the second chamber along the sealing ring 38 because the top wall 50 abuts sealingly against the sealing ring 38. The result is that the water will flow via the inlet 46 into the coffee space 64 of the coffee capsule. The water thus flows through the ground coffee which is present in the coffee space 64, whereby a coffee extract is formed. This coffee extract will leave the coffee capsule via the outlet filter 52. After this too, it holds that the coffee extract will choose the path of least resistance and hence cannot flow along the sealing ring 38. Instead, the coffee extract will flow through the exit filter 18 and flow further upwards via the fourth chamber 24 and the second riser 32 in order to leave this riser via its open top 36, so that the coffee extract ends up in the third chamber 10. Thus, at least substantially, all water present in the first chamber 2 is pressed through the ground coffee and extract is formed, in this example for approximately six cups of coffee. Upon completion of this process, approximately six cups of coffee can be poured from the third chamber 10. Also, the first and the second partial housings can be unscrewed from each other, after which in a simple manner the coffee capsule can be taken from the coffee holder. An advantage is that no coffee grounds are left behind in the coffee holder. The coffee holder can be simply taken away. Also achieved in this way is that the producer of the coffee capsule determines that the correct amount and type of coffee is used for preparing the six cups of coffee.

The coffee capsule can be used entirely analogously in coffee makers for preparing at most six cups of coffee, where the distance between the entrance filter and the exit filter, in use, is equal to 12 or 13.

The invention is not in any way limited to the embodiments outlined hereinabove but defined by the claims. Also, the invention can be used with, for instance, Napolitana coffee makers that can make a maximum of three, nine or twelve cups of coffee. For instance with the appliance that can make three cups at most, a coffee capsule can be used that is filled with an amount of coffee intended for preparing two or three cups of coffee.

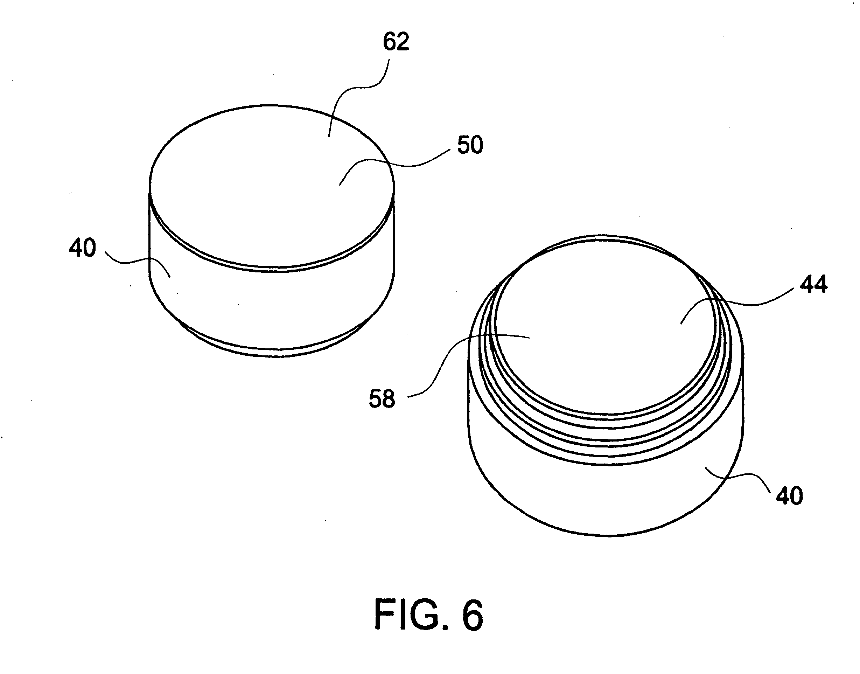

In the example, the sheets of filtering paper 58, 62 are on the inside of the coffee capsule (Figs. 3a-3d). It is also possible, however, that the sheets of filtering paper are on the outside of the coffee capsule, as shown in Fig. 6.

In the examples shown, the coffee capsule is manufactured from polypropylene. Other materials, however, are also conceivable, such as polyethylene. In the examples mentioned, the coffee capsule is filled with ground coffee. However, it is also conceivable that, besides ground coffee, other substances to be extracted are included, such as cocoa. Moreover, also other soluble substances may be included, such as milk powder. It is also possible that the coffee capsule is provided with 10-17 grams of ground coffee for preparing 3 cups of coffee or that the coffee capsule is provided with 19-27 grams of ground coffee for preparing 6 cups of coffee or that the coffee capsule is provided with 29-39 grams of ground coffee for preparing 9 cups of coffee or that the coffee capsule is provided with 42-53 grams of ground coffee for preparing 12 cups of coffee.

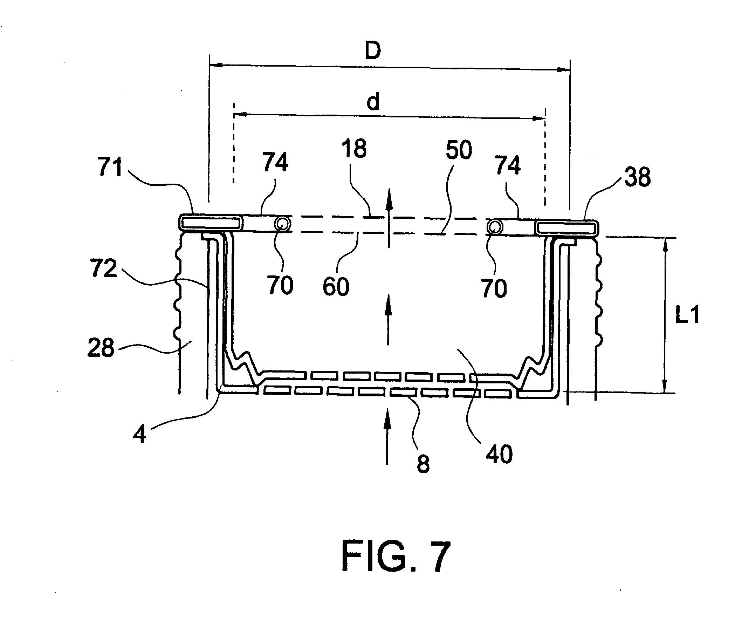

In each of the above-outlined embodiments, it holds that a largest diameter d of the coffee capsule is slightly smaller, for instance 2%, than a largest diameter D of the coffee holder (see Fig. 7). However, other diameters are also possible. It is also possible for the coffee capsule to be provided on the outside thereof with a sealing ring 70 closed upon itself which is attached to the top wall 50, with all openings 60 of the top wall situated within the surface enclosed by the sealing ring. This sealing ring, in use, forms a sealing between the top wall 50 of the coffee capsule and the part 74 of the second housing. In that case, the sealing 38 only provides a sealing between the first partial housing 28 and the part 74 of the second partial housing that is connected with the exit filter 18, this sealing ring 38 then not being used for obtaining a sealing between the coffee capsule 40 and the part 74 of the second partial housing. Instead, the sealing ring 70 is used for this purpose. Such variants are each understood to fall within the framework of the invention such as defined by the claims.

## Claims

1. A system provided with a Napolitana coffee maker (1) and a coffee capsule (40), wherein the Napolitana coffee maker (1) is provided with a first chamber (2) for receiving water and a coffee holder (4) provided with a second chamber (6) for receiving an amount of ground coffee, wherein in the coffee holder (4) a maximum amount of ground coffee can be received which is intended for preparing multiple cups of coffee, in particular at least two cups of coffee and more particularly at least three cups of coffee, and provided with an entrance filter (8) which forms a barrier to the ground coffee and which can pass a liquid, wherein the Napolitana coffee maker (1) is further provided with a third chamber (10) for receiving the coffee extract, a first riser (16) for supplying hot water from the first chamber (2) via the entrance filter (8) to the second chamber (6), an exit filter (18) which forms a barrier to the ground coffee and which can pass a liquid and with the aid of which the second chamber (6), in use, is closed off, and a fluid connection (20) which extends from the second chamber (6) to the third chamber (10) and which includes the exit filter (18), for supplying the coffee extract from the second chamber (6) via the exit filter (18) to the third chamber (10), and wherein the second chamber (6) can be opened for bringing the ground coffee into the second chamber (6), wherein the coffee capsule (40) is arranged to be received in the second chamber (6), wherein the coffee capsule (40) comprises a coffee space (64) which is filled with an amount of ground coffee (48), wherein the coffee capsule (40) is provided with an upstanding sidewall (42), a bottom (44) which is provided with an inlet filter (46) which forms a barrier to the ground coffee (48) and can pass a liquid, and a top wall (50) which is provided with an outlet filter (52) which forms a barrier to the ground coffee and can pass a liquid, wherein the coffee capsule (40) is so designed that when it is received in the second chamber (6) the top wall (50) of the coffee capsule is situated near the exit filter (18) of the Napolitana coffee maker (1) and the bottom (44) of the coffee capsule (40) is situated near the entrance filter (8) of the Napolitana coffee maker (1), and **characterized in that** the coffee capsule (40) is so designed that a distance between the bottom (44) and the top wall (50) of the coffee capsule (40) can be reduced by pressing the bottom(44) and the top wall (50) towards each other, and wherein the distance between the top wall (50) and the bottom (44) of the coffee capsule (40) before it is placed in the Napolitana coffee maker (1) is greater than a length of the second space (6) in a direction from the entrance filter (8) of the Napolitana coffee maker (1) to the exit filter (18) of the Napolitana coffee maker (1) so that, when, in use, the coffee capsule (40) is introduced into the second chamber (6) and when the second chamber (6) is thereupon closed, the coffee capsule (40) is clamped in the coffee holder (4) between the entrance filter (8) and the exit filter (18) of the Napolitana coffee maker (1) while the distance between the top wall (50) and the bottom (44) of the coffee capsule (40) will thereby decrease wherein, in particular through the clamping, between the coffee capsule (40) and the Napolitana coffee maker (1), a fluid sealing is formed so that water that flows from the first chamber (2) via the second chamber (6) to the third chamber (10) can only do so, at least substantially, by flowing through the coffee capsule (40) in the direction from the inlet filter (46) to the outlet filter (52) so that coffee extract is formed and the water in the form of coffee extract flows through the exit filter (18) to the third chamber (10), **in that** the coffee capsule (40) is so arranged that the upstanding sidewall (42) can be deformed for reducing said distance, **in that** the deformation of the upstanding sidewall (42) brings about the clamping, **in that** the upstanding sidewall (42) is manufactured from a rigid or semirigid material, **in that** the coffee space (64) before the coffee capsule(40) is placed in the second chamber (6) of the Napolitana coffee maker (1) is only for a part filled with the ground coffee so that the distance between the top wall (50) and bottom height of the coffee capsule (40) and hence the volume of the coffee space (64) can be reduced for placing the coffee capsule (40) in the second chamber (6), and **in that** the upstanding sidewall (42) of the coffee capsule (40) is provided with at least one weakened zone (54) so that through deformation of the weakened zone (54) said distance can decrease.

2. A system according to claim 1, **characterized in that** the weakened zone (54) is provided with a fold closed upon itself which extends in a plane which is substantially parallel to the bottom (44) of the coffee capsule (40) so that said distance can decrease when the upstanding sidewall (42) folds up around the at least one fold.

3. A system according to any one of the preceding claims 1-2, **characterized in that** the weakened zone (54) is so designed that it causes the clamping when said distance decreases.

4. A system according to any one of the preceding claims 1-3, **characterized in that** the upstanding sidewall (42) can fold up slightly resiliently for realizing the clamping.

5. A system according to any one of the preceding claims 1-4, **characterized in that** the upstanding sidewall (42) and/or the bottom (44) is manufactured from a plastic such as polypropylene or polyethylene.

6. A system according to any one of the preceding claims 1-5, **characterized in that** the bottom (44) is provided with multiple openings (56), while optionally on an inside and/or outside of the bottom a first sheet of filtering material (58) covers said openings (56).

7. A system according to any one of the preceding claims 1-6, **characterized in that** the top wall (50) is provided with multiple openings (60), while optionally on an inside and/or outside of the top wall (50) a second sheet of filtering material (62) covers said openings (60).

8. A system according to any one of the preceding claims 1-7, **characterized in that** the top wall (50) is manufactured from a plastic such as polypropylene or polyethylene.

9. A system according to claim 6, **characterized in that** the first sheet (58) is manufactured from filtering paper.

10. A system according to claim 7, **characterized in that** the second sheet (62) is manufactured from filtering paper.

11. A system according to any one of the preceding claims 1-10, **characterized in that** said distance can decrease to at least 7/8, more particularly to at least 3/4 of the original distance without the coffee capsule being broken.

12. A system according to any one of the preceding claims 1-11, **characterized in that** the coffee capsule (40) is provided on the outside thereof with a sealing ring (70) which can form a sealing with an inside of the second chamber (6) so that, in use, water flowing from the first chamber via the entrance filter (8) into the second chamber (6) can leave the second chamber (6) at least substantially exclusively via the exit filter (18) in the form of coffee beverage by flowing through the coffee capsule (40) from the inlet filter (46) to the outlet filter (52).

13. A system according to any one of the preceding claims 1-12, **characterized in that** the coffee capsule (40) is filled with an amount of coffee which is intended for preparing multiple cups of coffee, in particular for at least two cups of coffee, more particularly for approximately three cups of coffee, approximately six cups of coffee, approximately nine cups of coffee or approximately twelve cups of coffee.

14. A system according to any preceding claim, **characterized in that** the upstanding sidewall (42) of the coffee capsule (40) abuts at least substantially against an inner wall of the second chamber (6).

15. A system according to any preceding claim, **characterized in that** for opening and closing the second chamber (6), the exit filter (18) can be removed from the coffee holder (4) so that the second chamber (6) becomes accessible from outside, and wherein the exit filter (18) is re-placed again when closing off the second chamber (6).

16. A system according to any preceding claim, **characterized in that** the system and more particularly the Napolitana coffee maker (1) is provided with a sealing ring (38) between a part of the Napolitana coffee maker (1) that is connected with the exit filter (18) of the Napolitana coffee maker and the coffee holder (4) so that the second chamber (6) is closed off with the aid of the exit filter (18) and, in use, a liquid can leave the second chamber (6) only via the exit filter (18).

17. A system according to claim 16, **characterized in that** the coffee capsule (40) sealingly abuts against the sealing ring (38) for obtaining said fluid sealing, in particular whereby the coffee capsule (40), **in that** it is clamped, forms a proper sealing with the sealing ring (38).

18. A system according to claim 17, **characterized in that** the top wall (50) of the coffee capsule (40) sealingly abuts against the sealing ring (38) for obtaining said fluid sealing.

19. A system according to any preceding claim, **characterized in that** the Napolitana coffee maker (1) is provided with a second riser (22) which extends from a fourth chamber (24) situated on the outlet side of the exit filter (18) of the Napolitana coffee maker (1), into the third chamber (10) and to near a top of the third chamber, wherein the fourth chamber (24) and the second riser (22) form part of the fluid connection (20) which extends from the second chamber (6) to the third chamber (10).

20. A system according to any preceding claim, **characterized in that** the Napolitana coffee maker (1) is provided with a first and second partial housing (28, 30) which are detachably connected with each other, wherein the first partial housing (28) comprises the first chamber (2) and the second partial housing (30) comprises the third chamber (10) and wherein the exit filter (18) of the Napolitana coffee maker (1) is connected with the second partial housing (30) and wherein the coffee holder (4) is removably included in the first partial housing (28).

21. A system according to claims 19 and 20, **characterized in that** the fourth chamber (24) and the second riser (22) are situated in the second partial housing (30).

22. A system according to any preceding claim, **characterized in that** the system is provided with at least a first type of Napolitana coffee maker (1) and at least a second type of Napolitana coffee maker (1) which, for instance, are each arranged to receive a maximum amount of ground coffee for preparing a same number of cups of coffee, while the length of the second chamber (6) of the first type of Napolitana coffee maker is greater than the length of the second chamber (6) of the second type of Napolitana coffee maker, wherein the coffee capsule (40) can both be clampingly received in the second chamber (6) of the first type of Napolitana coffee maker and be clampingly received in the second chamber (6) of the second type of Napolitana coffee maker.

23. A system according to any preceding claim, **characterized in that** in the second chamber (6) a maximum amount of ground coffee can be received which is intended for a predetermined number of cups of coffee, wherein in the coffee capsule (40) an amount of ground coffee (48) is received which is intended for the predetermined number of cups of coffee.

24. A system according to any preceding claim, **characterized in that** the amount of ground coffee (48) included in the coffee capsule (40) is approximately equal to the maximum amount that can be received in the second chamber (6).

25. A system according to any one of the preceding claim, **characterized in that** the coffee capsule (40) is provided with 10-17 grams of ground coffee for preparing approximately three cups of coffee or that the coffee capsule is provided with 19-27 grams of ground coffee for preparing approximately six cups of coffee or that the coffee capsule is provided with 29-39 grams of ground coffee for preparing approximately nine cups of coffee or that the coffee capsule is provided with 42-53 grams of ground coffee for preparing approximately twelve cups of coffee.

26. A method for preparing a coffee beverage, wherein use is made of a Napolitana coffee maker (1) which is provided with a first chamber (2) for receiving water and a coffee holder (4) provided with a second chamber (6) for receiving an amount of ground coffee, wherein in the second chamber (6) a maximum amount of ground coffee can be received which is intended for preparing multiple cups of coffee, in particular at least two cups of coffee and more particularly at least three cups of coffee, and provided with an entrance filter (8) which forms a barrier to the ground coffee and which can pass a liquid, wherein the Napolitana coffee maker is further provided with a third chamber (10) for receiving the coffee beverage, a first riser (16) for supplying hot water from the first chamber (2) via the entrance filter (8) to the second chamber (6), an exit filter (18) which forms a barrier to the ground coffee and which can pass a liquid and with the aid of which the second chamber, in use, is closed off, and a fluid connection (20) which extends from the second chamber (6) to the third chamber (10) and which includes the exit filter (18), for supplying the coffee extract from the second chamber (6) via the exit filter to the third chamber (10), and wherein the second chamber (6) can be opened for bringing the ground coffee into the second chamber (6), wherein use is made of a coffee capsule (40) which comprises a coffee space (64) which is filled with an amount of ground coffee (48), wherein preferably the amount of ground coffee (48) is intended for preparing at least three cups of coffee, and wherein the coffee capsule (40) is provided with an upstanding sidewall (42), a bottom (44) which is provided with an inlet filter (46) which forms a barrier to the ground coffee (48) and can pass a liquid, and a top wall (50 which is provided with an outlet filter (52) which forms a barrier to the ground coffee (48) and can pass a liquid, wherein, in use, the following method steps are carried out:
the second chamber (6) is opened;
the coffee capsule (40) is included in the second chamber (6);
water is included in the first chamber (2);
the second chamber (6) is closed off with the aid of the exit filter (18), the water in the first chamber (2) is heated so that the water flows from the first chamber (2) through the entrance filter (8) of the second chamber (6), flows through the inlet filter (46) of the coffee capsule, flows through the ground coffee (48) so that coffee extract is formed, wherein the coffee extract flows via the outlet filter (52) and the exit filter (18) and the fluid connection (20) to the third chamber (10), **characterized in that** the coffee capsule (40) is so designed that a distance between the bottom (44) and the top wall (50) of the coffee capsule (40) can be reduced by pressing the bottom (44) and the top wall (50) towards each other, and wherein the distance between the top wall (50) and the bottom (44) of the coffee capsule (40) before it is placed in the Napolitana coffee maker (1) is greater than a length of the second chamber (6) in a direction from the entrance filter (8) of the Napolitana coffee maker (1) to the exit filter (18 of the Napolitana coffee maker (1),
wherein the method steps are carried out as follows:
the coffee capsule (40) is included in the second chamber (6) such that the top wall (50) of the coffee capsule (40) is situated near the exit filter (18) of the Napolitana coffee maker (1) and the bottom (44) of the coffee capsule (40) is situated near the entrance filter of the Napolitana coffee maker (1);
the second chamber (6) is closed off with the aid of the exit filter (18), wherein the coffee capsule (40) in the second chamber (6) is clamped between the entrance filter (8) and the exit filter (18) of the Napolitana coffee maker (1) while the distance between the top wall (50) and the bottom (44) of the coffee capsule (40) will thereby decrease and wherein in particular through the clamping, between the coffee capsule (40) and the Napolitana coffee maker (1), more particularly between the top wall (50) of the coffee capsule (40) and the Napolitana coffee maker (1), a fluid sealing is formed, **in that** the coffee capsule (40) is so arranged that the upstanding sidewall (42) can be deformed for reducing said distance, **in that** the deformation of the upstanding sidewall (42) brings about the clamping, **in that** the upstanding sidewall (42) is manufactured from a rigid or semirigid material, **in that** the coffee space (64) before the coffee capsule (40) is placed in the second chamber (6) of the Napolitana coffee maker (1) is only for a part filled with the ground coffee (48) so that the distance between the top wall (50) and bottom height of the coffee capsule (40) and hence the volume of the coffee space (64) can be reduced for placing the coffee capsule (40) in the second chamber (6), and **in that** the upstanding sidewall (42) of the coffee capsule (40) is provided with at least one weakened zone (54) so that through deformation of the weakened zone (54) said distance can decrease.

27. A method according to claim 26, **characterized in that** the fluid sealing is formed with the aid of a sealing ring (38) of the Napolitana coffee maker (1), which sealing ring (38) forms a fluid sealing between a part of the Napolitana coffee maker (1) that is connected with the exit filter (18) of the Napolitana coffee maker (1) and the coffee holder (4), so that a liquid that flows via the entrance filter (8) into the second chamber (6) can leave the second chamber (6) only via the exit filter (18) both when no coffee capsule (40) is present in the second chamber (6) and also when there is a coffee capsule (40) present in the second chamber (6).

## Patentansprüche

1. System, versehen mit einer Maschine zur Zubereitung von Kaffee auf neapolitanische Art (1) und einer Kaffeekapsel (40), wobei die Maschine zur Zubereitung von Kaffee auf neapolitanische Art (1) versehen ist mit einer ersten Kammer (2) zum Aufnehmen von Wasser und einem Kaffeehalter (4), versehen mit einer zweiten Kammer (6) zum Aufnehmen einer Menge von gemahlenem Kaffee, wobei in dem Kaffeehalter (4) eine maximale Menge von gemahlenem Kaffee für die Zubereitung von mehreren Tassen Kaffee, vorzugsweise mindestens zwei Tassen Kaffee und noch bevorzugter von mindestens drei Tassen Kaffee aufgenommen werden kann, und versehen mit einem Eingangsfilter (8), der eine Barriere zu dem gemahlenen Kaffee bildet und der Flüssigkeit durchlassen kann, wobei die Maschine zur Zubereitung von Kaffee auf neapolitanische Art (1) ferner versehen ist mit einer dritten Kammer (10) zum Aufnehmen von Kaffeeextrakt, einem ersten Aufstiegsrohr (16) zum Zuführen von Heißwasser aus der ersten Kammer (2) über den Eingangsfilter (8) zur zweiten Kammer (6), einem Ausgangsfilter (18), der eine Barriere zu dem gemahlenen Kaffee bildet und der eine Flüssigkeit durchlassen kann und mit dessen Hilfe die zweite Kammer (6) bei Verwendung verschlossen wird, und einer Flüssigkeitsverbindung (20), die von der zweiten Kammer (6) zur dritten Kammer (10) verläuft und die den Ausgangsfilter (18) zum Zuführen von Kaffeeextrakt von der zweiten Kammer (6) über den Ausgangsfilter (18) zu der dritten Kammer (10) umfasst, und wobei die zweite Kammer (6) geöffnet werden kann, um den gemahlenen Kaffee in die zweite Kammer (6) zu bringen, wobei die Kaffeekapsel (40) geeignet ist, um in die zweite Kammer (6) aufgenommen zu werden, wobei die Kaffeekapsel (40) einen Kaffeeraum (64) umfasst, der mit einer Menge von gemahlenem Kaffee (48) gefüllt ist, wobei die Kaffeekapsel (40) versehen ist mit einer aufrechten Seitenwand (42), einem Boden (44), versehen mit einem Einlassfilter (46), der eine Barriere zu dem gemahlenen Kaffee (48) bildet und der eine Flüssigkeit durchlassen kann, und einer oberen Wand (50), versehen mit einem Auslassfilter (52), der eine Barriere zu dem gemahlenen Kaffee bildet und der eine Flüssigkeit durchlassen kann, wobei die Kaffeekapsel (40) so konzipiert ist, dass, wenn sie in die zweite Kammer (6) aufgenommen wird, die obere Wand (50) der Kaffeekapsel sich in der Nähe des Auslassfilters (18) der Maschine zur Zubereitung von Kaffee auf neapolitanische Art (1) und der Boden (44) der Kaffeekapsel (40 sich in der Nähe des Eingangsfilters (8) der Maschine zur Zubereitung von Kaffee auf neapolitanische Art (1) befindet, und **dadurch gekennzeichnet, dass** die Kaffeekapsel (40) so konzipiert ist, dass ein Abstand zwischen dem Boden (44) und der oberen Wand (50) der Kaffeekapsel (40) reduziert werden kann, indem der Boden (44) und die obere Wand (50) aufeinander zu gedrückt werden, und wobei der Abstand zwischen der oberen Wand (50) und dem Boden (44) der Kaffeekapsel (40), bevor diese in die Maschine zur Zubereitung von Kaffee auf neapolitanische Art (1) platziert wird, größer ist als die Länge des zweiten Raums (6) in einer Richtung vom Eingangsfilter (8) der Maschine zur Zubereitung von Kaffee auf neapolitanische Art (1) zum Ausgangsfilter (18) der Maschine zur Zubereitung von Kaffee auf neapolitanische Art (1), sodass, wenn bei Verwendung die Kaffeekapsel (40) in die zweite Kammer (6) eingeführt wird, und wenn die zweite Kammer (6) dann geschlossen wird die Kaffeekapsel (40) in dem Kaffeehalter (4) zwischen dem Eingangsfilter (8) und dem Ausgangsfilter (18) der Maschine zur Zubereitung von Kaffee auf neapolitanische Art (1) eingeklemmt wird, während der Abstand zwischen der oberen Wand (50) und dem Boden (44) der Kaffeekapsel (40) dadurch abnimmt, wobei insbesondere durch das Einklemmen zwischen der Kaffeekapsel (40) und der Maschine zur Zubereitung von Kaffee auf neapolitanische Art (1) eine Flüssigkeitsabdichtung gebildet wird, sodass Wasser, das von der ersten Kammer (2) über die zweite Kammer (6) zu der dritten Kammer (10) fließt, dies mindestens im Wesentlichen nur tun kann, indem es durch die Kaffeekapsel (40) in der Richtung vom Einlassfilter (46) zum Auslassfilter (52) fließt, sodass Kaffeeextrakt gebildet wird und das Wasser in Form von Kaffeeextrakt durch den Ausgangsfilter (18) zu der dritten Kammer (10) fließt, dass die Kaffeekapsel (40) so angeordnet ist, dass die aufrechte Seitenwand (42) deformiert werden kann, um den Abstand zu reduzieren, dass die Deformation der aufrechten Seitenwand (42) das Einklemmen bewerkstelligt, dass die aufrechte Seitenwand (42) aus einem starren oder halbstarren Material hergestellt ist, dass der Kaffeeraum (64), bevor die Kaffeekapsel (40) in die zweite Kammer (6) der Maschine zur Zubereitung von Kaffee auf neapolitanische Art (1) platziert wird, nur teilweise mit dem gemahlenen Kaffee gefüllt ist, sodass der Abstand zwischen der oberen Wand (50) und der Bodenhöhe der Kaffeekapsel (40) und folglich das Volumen des Kaffeeraums (64) reduziert werden können, um die Kaffeekapsel (40) in die zweite Kammer (6) zu platzieren, und dass die aufrechte Seitenwand (42) der Kaffeekapsel (40) mit mindestens einer geschwächten Zone (54) versehen ist, sodass durch Deformation der geschwächten Zone (54) der Abstand abnehmen kann.

2. System nach Anspruch 1, **dadurch gekennzeichnet, dass** die geschwächte Zone (54) mit einem auf sich selbst geschlossenen Falz versehen ist, der in einer Ebene verläuft, die im Wesentlichen parallel zum Boden (44) der Kaffeekapsel (40) ist, sodass der Abstand abnehmen kann, wenn sich die aufrechte Seitenwand (42) um den mindestens einen Falz faltet.

3. System nach einem der vorhergehenden Ansprüche 1-2, **dadurch gekennzeichnet, dass** die geschwächte Zone (54) so konzipiert ist, dass sie das Einklemmen bewerkstelligt, wenn der Abstand abnimmt.

4. System nach einem der vorhergehenden Ansprüche 1-3, **dadurch gekennzeichnet, dass** die aufrechte Seitenwand (42) leicht federnd faltbar ist, um das Einklemmen zu bewerkstelligen.

5. System nach einem der vorhergehenden Ansprüche 1-4, **dadurch gekennzeichnet, dass** die aufrechte Seitenwand (42) und/oder der Boden (44) aus einem Kunststoff wie Polypropylen oder Polyethylen hergestellt sind.

6. System nach einem der vorhergehenden Ansprüche 1-5, **dadurch gekennzeichnet, dass** der Boden (44) mit mehreren Öffnungen (56) versehen ist, während optional auf einer Innenseite und/oder einer Außenseite des Bodens ein erstes Blatt Filtermaterial (58) die Öffnungen (56) bedeckt.

7. System nach einem der vorhergehenden Ansprüche 1-6, **dadurch gekennzeichnet, dass** die obere Wand (50) mit mehreren Öffnungen (60) versehen ist, während optional auf einer Innenseite und/oder einer Außenseite der oberen Wand (50) ein zweites Blatt Filtermaterial (62) die Öffnungen (60) bedeckt.

8. System nach einem der vorhergehenden Ansprüche 1-7, **dadurch gekennzeichnet, dass** die obere Wand (50) aus einem Kunststoff wie Polypropylen oder Polyethylen hergestellt ist.

9. System nach Anspruch 6, **dadurch gekennzeichnet, dass** das erste Blatt (58) aus Filterpapier hergestellt ist.

10. System nach Anspruch 7, **dadurch gekennzeichnet, dass** das zweite Blatt (62) aus Filterpapier hergestellt ist.

11. System nach einem der vorhergehenden Ansprüche 1-10, **dadurch gekennzeichnet, dass** der Abstand auf mindestens 7/8, insbesondere auf mindestens 3/4 des ursprünglichen Abstands abnehmen kann ohne dass die Kaffeekapsel gebrochen wird.

12. System nach einem der vorhergehenden Ansprüche 1-11, **dadurch gekennzeichnet, dass** die Kaffeekapsel (40) auf ihrer Außenseite mit einem Dichtungsring (70) versehen ist, der eine Dichtung mit einer Innenseite der zweiten Kammer (6) bilden kann, sodass bei Verwendung Wasser, das von der ersten Kammer über den Eingangsfilter (8) in die zweite Kammer (6) fließt, die zweite Kammer (6) mindestens im Wesentlichen ausschließlich über den Ausgangsfilter (18) in Form eines Kaffeegetränks verlassen kann, indem es durch die Kaffeekapsel (40) vom Einlassfilter (46) zum Auslassfilter (52) fließt.

13. System nach einem der vorhergehenden Ansprüche 1-12, **dadurch gekennzeichnet, dass** die Kaffeekapsel (40) mit einer Menge von Kaffee gefüllt ist, die für die Zubereitung von mehreren Tassen Kaffee, vorzugsweise von mindestens zwei Tassen Kaffee, noch bevorzugter von ungefähr drei Tassen Kaffee, ungefähr sechs Tassen Kaffee, ungefähr neun Tassen Kaffee oder ungefähr zwölf Tassen Kaffee bestimmt ist.

14. System nach einem der vorhergehenden Ansprüche, **dadurch gekennzeichnet, dass** die aufrechte Seitenwand (42) der Kaffeekapsel (40) mindestens im Wesentlichen gegen eine Innenwand der zweiten Kammer (6) anstößt.

15. System nach einem der vorhergehenden Ansprüche, **dadurch gekennzeichnet, dass** zum Öffnen und Schließen der zweiten Kammer (6) der Ausgangsfilter (18) aus dem Kaffeehalter (4) entfernt werden kann, sodass die zweite Kammer (6) von außen zugänglich wird, und wobei der Ausgangsfilter (18) wieder angebracht wird, wenn die zweite Kammer (6) verschlossen wird.

16. System nach einem der vorhergehenden Ansprüche, **dadurch gekennzeichnet, dass** das System, und insbesondere die Maschine zur Zubereitung von Kaffee auf neapolitanische Art (1), versehen ist mit einem Dichtungsring (38) zwischen einem Teil der Maschine zur Zubereitung von Kaffee auf neapolitanische Art (1), der mit dem Ausgangsfilter (18) der Maschine zur Zubereitung von Kaffee auf neapolitanische Art verbunden ist, und dem Kaffeehalter (4), sodass die zweite Kammer (6) mithilfe des Ausgangsfilters (18) verschlossen wird und bei Verwendung eine Flüssigkeit die zweite Kammer (6) nur über den Ausgangsfilter (18) verlassen kann.

17. System nach Anspruch 16, **dadurch gekennzeichnet, dass** die Kaffeekapsel (40) dichtend gegen den Dichtungsring (38) anstößt, um die Flüssigkeitsabdichtung zu bewerkstelligen, insbesondere wobei die Kaffeekapsel (40), indem sie eingeklemmt ist, eine korrekte Abdichtung mit dem Dichtungsring (38) bildet.

18. System nach Anspruch 17, **dadurch gekennzeichnet, dass** die obere Wand (50) der Kaffeekapsel (40) dichtend gegen den Dichtungsring (38) anstößt, um die Flüssigkeitsabdichtung zu bewerkstelligen.

19. System nach einem der vorhergehenden Ansprüche, **dadurch gekennzeichnet, dass** die Maschine zur Zubereitung von Kaffee auf neapolitanische Art (1) mit einem zweiten Aufstiegsrohr (22) versehen ist, das von einer vierten Kammer (24), angeordnet auf der Auslassseite des Ausgangsfilters (18) der Maschine zur Zubereitung von Kaffee auf neapolitanische Art (1), in die dritte Kammer (10) und bis nahe zur Oberseite der dritten Kammer verläuft, wobei die vierte Kammer (24) und das zweite Aufstiegsrohr (22) Teil der Flüssigkeitsverbindung (20) bilden, die von der zweiten Kammer (6) zur dritten Kammer (10) verläuft.

20. System nach einem der vorhergehenden Ansprüche, **dadurch gekennzeichnet, dass** die Maschine zur Zubereitung von Kaffee auf neapolitanische Art (1) mit einem ersten und zweiten Teilgehäuse (28, 30) versehen ist, die abnehmbar miteinander verbunden sind, wobei das erste Teilgehäuse (28) die erste Kammer (2) enthält und das zweite Teilgehäuse (30) die dritte Kammer (10) enthält und wobei der Ausgangsfilter (18) der Maschine zur Zubereitung von Kaffee auf neapolitanische Art (1) mit dem zweiten Teilgehäuse (30) verbunden ist und wobei der Kaffeehalter (4) entfernbar in dem ersten Teilgehäuse (28) enthalten ist.

21. System nach Anspruch 19 und 20, **dadurch gekennzeichnet, dass** die vierte Kammer (24) und das zweite Aufstiegsrohr (22) in dem zweiten Teilgehäuse (30) angeordnet sind.

22. System nach einem der vorhergehenden Ansprüche, **dadurch gekennzeichnet, dass** das System mit mindestens einem ersten Typ einer Maschine zur Zubereitung von Kaffee auf neapolitanische Art (1) und mindestens einem zweiten Typ einer Maschine zur Zubereitung von Kaffee auf neapolitanische Art (1) versehen ist, die beispielsweise jeweils geeignet sind, eine maximale Menge an gemahlenem Kaffee aufzunehmen, um eine gleiche Anzahl von Tassen Kaffee zuzubereiten, während die Länge der zweiten Kammer (6) des ersten Typs einer Maschine zur Zubereitung von Kaffee auf neapolitanische Art größer ist als die Länge der zweiten Kammer (6) des zweiten Typs einer Maschine zur Zubereitung von Kaffee auf neapolitanische Art, wobei die Kaffeekapsel (40) klemmend in die zweite Kammer (6) des ersten Typs einer Maschine zur Zubereitung von Kaffee auf neapolitanische Art und ebenfalls klemmend in die zweite Kammer (6) des zweiten Typs einer Maschine zur Zubereitung von Kaffee auf neapolitanische Art aufgenommen werden kann.

23. System nach einem der vorhergehenden Ansprüche, **dadurch gekennzeichnet, dass** in die zweite Kammer (6) eine maximale Menge von gemahlenem Kaffee aufgenommen werden kann, der für eine vorbestimmte Anzahl von Tassen Kaffee vorgesehen ist, wobei in die Kaffeekapsel (40) eine Menge von gemahlenem Kaffee (48) aufgenommen wird, der für die vorbestimmte Anzahl von Tassen Kaffee vorgesehen ist.

24. System nach einem der vorhergehenden Ansprüche, **dadurch gekennzeichnet, dass** die in der Kaffeekapsel (40) enthaltene Menge von gemahlenem Kaffee (48) gleich der maximalen Menge ist, die in die zweite Kammer aufgenommen werden kann.

25. System nach einem der vorhergehenden Ansprüche, **dadurch gekennzeichnet, dass** die Kaffeekapsel (40) mit 10-17 Gramm gemahlenem Kaffee zur Zubereitung von ungefähr drei Tassen Kaffee versehen ist oder dass die Kaffeekapsel mit 19-27 Gramm gemahlenem Kaffee zur Zubereitung von ungefähr sechs Tassen Kaffee versehen ist oder dass die Kaffeekapsel mit 29-39 Gramm gemahlenem Kaffee zur Zubereitung von ungefähr neun Tassen Kaffee versehen ist oder dass die Kaffeekapsel mit 42-53 Gramm gemahlenem Kaffee zur Zubereitung von ungefähr zwölf Tassen Kaffee versehen ist.

26. Verfahren zur Zubereitung eines Kaffeegetränks, wobei eine Maschine zur Zubereitung von Kaffee auf neapolitanische Art (1) verwendet wird, die mit einer ersten Kammer (2) zum Aufnehmen von Wasser und einem Kaffeehalter (4), versehen mit einer zweiten Kammer (6) zum Aufnehmen einer Menge von gemahlenem Kaffee, versehen ist, wobei in die zweite Kammer (6) eine maximale Menge von gemahlenem Kaffee für die Zubereitung von mehreren Tassen Kaffee, vorzugsweise mindestens zwei Tassen Kaffee und noch bevorzugter von mindestens drei Tassen Kaffee aufgenommen werden kann, und versehen mit einem Eingangsfilter (8), der eine Barriere zu dem gemahlenen Kaffee bildet und der Flüssigkeit durchlassen kann, wobei die Maschine zur Zubereitung von Kaffee auf neapolitanische Art (1) ferner versehen ist mit einer dritten Kammer (10) zum Aufnehmen des Kaffeegetränks, einem ersten Aufstiegsrohr (16) zum Zuführen von Heißwasser aus der ersten Kammer (2) über den Eingangsfilter (8) zur zweiten Kammer (6), einem Ausgangsfilter (18), der eine Barriere zu dem gemahlenen Kaffee bildet und der eine Flüssigkeit durchlassen kann und mit dessen Hilfe die zweite Kammer (6) bei Verwendung verschlossen wird, und einer Flüssigkeitsverbindung (20), die von der zweiten Kammer (6) zu der dritten Kammer (10) verläuft und die den Ausgangsfilter (18) zum Zuführen des Kaffeeextrakts von der zweiten Kammer (6) über den Ausgangsfilter zu der dritten Kammer (10) umfasst, und wobei die zweite Kammer (6) geöffnet werden kann, um den gemahlenen Kaffee in die zweite Kammer (6) zu bringen, wobei eine Kaffeekapsel (40) verwendet wird, die einen Kaffeeraum (64) umfasst, der mit einer Menge von gemahlenem Kaffee (48) gefüllt ist, wobei vorzugsweise die Menge von gemahlenem Kaffee zur Zubereitung von mindestens drei Tassen Kaffee vorgesehen ist, und wobei die Kaffeekapsel (40) versehen ist mit einer aufrechten Seitenwand (42), einem Boden (44), versehen mit einem Einlassfilter (46), der eine Barriere zu dem gemahlenen Kaffee (48) bildet und der eine Flüssigkeit durchlassen kann, und einer oberen Wand (50), versehen mit einem Auslassfilter (52), der eine Barriere zu dem gemahlenen Kaffee (48) bildet und der eine Flüssigkeit durchlassen kann,
wobei bei Verwendung folgende Verfahrensschritte ausgeführt werden:
die zweite Kammer (6) wird geöffnet;
die Kaffeekapsel (40) wird in die zweite Kammer (6) aufgenommen;
Wasser wird in die erste Kammer (2) aufgenommen;
die zweite Kammer (6) wird mithilfe des Ausgangsfilters (18) verschlossen, das Wasser in der ersten Kammer (2) wird erwärmt, sodass das Wasser von der ersten Kammer (2) durch den Eingangsfilter (8) der zweiten Kammer (6) fließt, durch den Einlassfilter (46) der Kaffeekapsel fließt, durch den gemahlenen Kaffee (48) fließt, sodass Kaffeeextrakt gebildet wird, wobei der Kaffeeextrakt über den Auslassfilter (52) und den Ausgangsfilter (18) und die Flüssigkeitsverbindung (20) zur dritten Kammer (10) fließt, **dadurch gekennzeichnet, dass** die Kaffeekapsel (40) so konzipiert ist, dass ein Abstand zwischen dem Boden (44) und der oberen Wand (50) der Kaffeekapsel (40) reduziert werden kann, indem man den Boden (44) und die obere Wand (50) zueinander hin drückt, und wobei der Abstand zwischen der oberen Wand (50) und dem Boden (44) der Kaffeekapsel (40), bevor diese in die Maschine zur Zubereitung von Kaffee auf neapolitanische Art (1) platziert wird, größer ist als die Länge der zweiten Kammer (6) in einer Richtung vom Eingangsfilter (8) der Maschine zur Zubereitung von Kaffee auf neapolitanische Art (1) zum Ausgangsfilter (18) der Maschine zur Zubereitung von Kaffee auf neapolitanische Art (1), wobei die Verfahrensschritte wie folgt ausgeführt werden:
die Kaffeekapsel (40) wird so in die zweite Kammer (6) aufgenommen, dass die obere Wand (50) der Kaffeekapsel (40) nahe dem Ausgangsfilter (18) der Maschine zur Zubereitung von Kaffee auf neapolitanische Art (1) angeordnet ist und der Boden (44) der Kaffeekapsel (40) nahe dem Eingangsfilter der Maschine zur Zubereitung von Kaffee auf neapolitanische Art (1) angeordnet ist;
die zweite Kammer (6) wird mithilfe des Ausgangsfilters (18) verschlossen, wobei die Kaffeekapsel (40) in der zweiten Kammer (6) zwischen dem Eingangsfilter (8) und dem Ausgangsfilter (18) der Maschine zur Zubereitung von Kaffee auf neapolitanische Art (1) eingeklemmt wird, während der Abstand zwischen der oberen Wand (50) und dem Boden (44) der Kaffeekapsel (40) dadurch abnimmt und wobei insbesondere durch das Einklemmen zwischen der Kaffeekapsel (40) und der Maschine zur Zubereitung von Kaffee auf neapolitanische Art (1), insbesondere zwischen der oberen Wand (50) der Kaffeekapsel (40) und der Maschine zur Zubereitung von Kaffee auf neapolitanische Art (1) eine Flüssigkeitsdichtung gebildet wird, dass die Kaffeekapsel (40) so angeordnet wird, dass die aufrechte Seitenwand (42) deformiert werden kann, um den Abstand zu reduzieren, dass die Deformation der aufrechten Seitenwand (42) das Einklemmen bewerkstelligt, dass die aufrechte Seitenwand (42) aus einem starren oder halbstarren Material hergestellt ist, dass der Kaffeeraum (64), bevor die Kaffeekapsel (40) in die zweite Kammer (6) der Maschine zur Zubereitung von Kaffee auf neapolitanische Art (1) platziert wird, nur teilweise mit dem gemahlenen Kaffee (48) gefüllt ist, sodass der Abstand zwischen der oberen Wand (50) und der Bodenhöhe der Kaffeekapsel (40) und folglich das Volumen des Kaffeeraums (64) reduziert werden können, um die Kaffeekapsel (40) in die zweite Kammer (6) zu platzieren, und dass die aufrechte Seitenwand (42) der Kaffeekapsel (40) mit mindestens einer geschwächten Zone (54) versehen ist, sodass durch Deformation der geschwächten Zone (54) der Abstand abnehmen kann.

27. Verfahren nach Anspruch 26, **dadurch gekennzeichnet, dass** die Flüssigkeitsabdichtung mithilfe eines Dichtungsrings (38) der Maschine zur Zubereitung von Kaffee auf neapolitanische Art (1) gebildet wird, wobei der Dichtungsring (38) eine Flüssigkeitsabdichtung bildet zwischen einem Teil der Maschine zur Zubereitung von Kaffee auf neapolitanische Art (1), der mit dem Ausgangsfilter (18) der Maschine zur Zubereitung von Kaffee auf neapolitanische Art (1) verbunden ist, und dem Kaffeehalter (4), sodass eine Flüssigkeit, die über den Eingangsfilter (8) in die zweite Kammer (6) fließt, die zweite Kammer (6) nur über den Ausgangsfilter (18) verlassen kann, und zwar sowohl wenn sich keine Kaffeekapsel (40) in der zweiten Kammer (6) befindet als auch wenn sich eine Kaffeekapsel (40) in der zweiten Kammer (6) befindet.

## Revendications

1. Système muni d'une cafetière napolitaine (1) et une capsule de café (40), dans lequel la cafetière napolitaine (1) est munie d'une première chambre (2) pour recevoir de l'eau et un réservoir de café (4) muni d'une deuxième chambre (6) pour recevoir une quantité de café moulu, dans lequel dans le réservoir de café (4), une quantité maximum de café moulu peut être reçue, qui est prévue pour préparer plusieurs tasses de café, en particulier au moins deux tasses de café et plus particulièrement au moins trois tasses de café, et munie d'un filtre d'entrée (8) qui forme une barrière au café moulu et qui peut laisser passer un liquide, dans lequel la cafetière napolitaine (1) est en outre munie d'une troisième chambre (10) pour recevoir l'extrait de café, une première colonne montante (16) pour amener l'eau chaude de la première chambre (2) via le filtre d'entrée (8) à la deuxième chambre (6), un filtre de sortie (18) qui forme une barrière au café moulu et qui peut laisser passer un liquide et avec l'aide duquel la deuxième chambre (6), à l'usage, est fermée, et un raccordement de fluide (20) qui s'étend de la deuxième chambre (6) à la troisième chambre (10) et qui comprend le filtre de sortie (18) pour amener l'extrait de café de la deuxième chambre (6), via le filtre de sortie (18) à la troisième chambre (10), et dans lequel la deuxième chambre (6) peut être ouverte pour amener le café moulu dans la deuxième chambre (6), dans lequel la capsule de café (40) est agencée pour être reçue dans la deuxième chambre (6), dans lequel la capsule de café (40) comprend un espace de café (64) qui est rempli avec une quantité de café moulu (48), dans lequel la capsule de café (40) est munie d'une paroi latérale droite (42), un fond (44) qui est muni d'un filtre d'entrée (46) qui forme une barrière au café moulu (48) et peut laisser passer un liquide, et une paroi supérieure (50) qui est munie d'un filtre de sortie (52) qui forme une barrière au café moulu et peut laisser passer un liquide, dans lequel la capsule de café (40) est conçue de sorte que lorsqu'elle est reçue dans la deuxième chambre (6), la paroi supérieure (50) de la capsule de café est située à proximité du filtre de sortie (18) de la cafetière napolitaine (1) et le fond (44) de la capsule de café (40) est situé à proximité du filtre d'entrée (8) de la cafetière napolitaine (1), et
**caractérisé en ce que** la capsule de café (40) est conçue de sorte qu'une distance entre le fond (44) et la paroi supérieure (50) de la capsule de café (40) peut être réduite en comprimant le fond (44) et la paroi supérieure (50) l'un vers l'autre, et dans lequel la distance entre la paroi supérieure (50) et le fond (44) de la capsule de café (40) avant ne qu'elle soit placée dans la cafetière napolitaine (1) est supérieure à une longueur du second espace (6) dans une direction allant du filtre d'entrée (8) de la cafetière napolitaine (1) au filtre de sortie (18) de la cafetière napolitaine (1) de sorte que, lorsque, à l'usage, la capsule de café (40) est introduite dans la deuxième chambre (6) et lorsque la deuxième chambre (6) est refermée sur cette dernière, la capsule de café (40) est bloquée dans le réservoir de café (4) entre le filtre d'entrée (8) et le filtre de sortie (18) de la cafetière napolitaine (1) tandis que la distance entre la paroi supérieure (50) et le fond (44) de la capsule de café (40) diminue ainsi, et dans lequel, en particulier par le biais du serrage, entre la capsule de café (40) et la cafetière napolitaine (1), un joint d'étanchéité au fluide est formé de sorte que l'eau qui s'écoule de la première chambre (2) via la deuxième chambre (6) jusqu'à la troisième chambre (10) ne peut faire que cela, au moins sensiblement en s'écoulant par la capsule de café (40) dans la direction allant du filtre d'entrée (46) au filtre de sortie (52) de sorte que l'extrait de café est formé et l'eau sous la forme d'extrait de café s'écoule par le filtre de sortie (18) dans la troisième chambre (10), **en ce que** la capsule de café (40) est agencée de sorte que la paroi latérale droite (42) peut être déformée en réduisant ladite distance, **en ce que** la déformation de la paroi latérale droite (42) entraîne le serrage, **en ce que** la paroi latérale droite (42) est fabriquée à partir d'un matériau rigide ou semi-rigide, **en ce que** l'espace de café (64) avant que la capsule de café (40) ne soit placée dans la deuxième chambre (6) de la cafetière napolitaine (1), n'est prévu que pour une partie remplie avec le café moulu de sorte que la distance entre la hauteur de paroi supérieure (50) et du fond de la capsule de café (40) et par conséquent le volume de l'espace de café (64) peut être réduite pour placer la capsule de café (40) dans la deuxième chambre (6) et **en ce que** la paroi latérale droite (42) de la capsule de café (40) est prévue avec au moins une zone affaiblie (54) de sorte que par le biais de la déformation de la zone affaiblie (54), ladite distance peut diminuer.

2. Système selon la revendication 1, **caractérisé en ce que** la zone affaiblie (54) est munie d'un pli refermé sur lui-même qui s'étend dans un plan qui est sensiblement parallèle au fond (44) de la capsule de café (40) de sorte que ladite distance peut diminuer lorsque la paroi latérale droite (42) se replie autour du au moins un pli.

3. Système selon l'une quelconque des revendications 1 à 2, **caractérisé en ce que** la zone affaiblie (54) est conçue de sorte qu'elle provoque le serrage lorsque ladite distance diminue.

4. Système selon l'une quelconque des revendications 1 à 3, **caractérisé en ce que** la paroi latérale droite (42) peut se replier légèrement de manière élastique pour réaliser le serrage.

5. Système selon l'une quelconque des revendication 1 à 4, **caractérisé en ce que** la paroi latérale droite (42) et/ou le fond (44) est (sont) fabriqué(e) (fabriqués) à partir d'un plastique tel que le polypropylène ou le polyéthylène.

6. Système selon l'une quelconque des revendications 1 à 5, **caractérisé en ce que** le fond (44) est muni de plusieurs ouvertures (56), alors que, facultativement à l'intérieur et/ou à l'extérieur du fond, une première feuille du matériau filtrant (58) recouvre lesdites ouvertures (56).

7. Système selon l'une quelconque des revendications 1 à 6, **caractérisé en ce que** la paroi supérieure (50) est prévue avec plusieurs ouvertures (60), alors que, facultativement, à l'intérieur et/ou à l'extérieur de la paroi supérieure (50), une seconde feuille de matériau filtrant (62) recouvre lesdites ouvertures (60).

8. Système selon l'une quelconque des revendications 1 à 7, **caractérisé en ce que** la paroi supérieure (50) est fabriquée à partir d'un plastique tel que le polypropylène ou le polyéthylène.

9. Système selon la revendication 6, **caractérisé en ce que** la première feuille (58) est fabriquée à partir d'un papier filtrant.

10. Système selon la revendication 7, **caractérisé en ce que** la seconde feuille (62) est fabriquée à partir d'un papier filtrant.

11. Système selon l'une quelconque des revendications 1 à 10, **caractérisé en ce que** ladite distance peut diminuer d'au moins 7/8, plus particulièrement d'au moins 3/4 de la distance originale sans que la capsule de café ne se casse.

12. Système selon l'une quelconque des revendications 1 à 11, **caractérisé en ce que** la capsule de café (40) est prévue sur son extérieur avec une bague d'étanchéité (70) qui peut former un joint d'étanchéité avec un intérieur de la deuxième chambre (6), de sorte qu'à l'usage, l'eau s'écoulant de la première chambre via le filtre d'entrée (8) dans la deuxième chambre (6) peut sortir de la deuxième chambre (6) au moins sensiblement exclusivement via le filtre de sortie (18) sous la forme de boisson de café en s'écoulant par la capsule de café (40) du filtre d'entrée (46) au filtre de sortie (52).

13. Système selon l'une quelconque des revendications 1 à 12, **caractérisé en ce que** la capsule de café (40) est remplie avec une quantité de café qui est prévue pour préparer plusieurs tasses de café, en particulier au moins deux tasses de café, plus particulièrement pour approximativement trois tasses de café, approximativement six tasses de café, approximativement neuf tasses de café ou approximativement douze tasses de café.

14. Système selon l'une quelconque des revendications précédentes, **caractérisé en ce que** la paroi latérale droite (42) de la capsule de café (40) vient en butée au moins sensiblement contre une paroi interne de la deuxième chambre (6).

15. Système selon l'une quelconque des revendications précédentes, **caractérisé en ce que** pour ouvrir et fermer la deuxième chambre (6), le filtre de sortie (18) peut être retiré du réservoir de café (4) de sorte que la deuxième chambre (6) devient accessible de l'extérieur, et dans lequel le filtre de sortie (18) est replacé à nouveau lors de la fermeture de la deuxième chambre (6).

16. Système selon l'une quelconque des revendications précédentes, **caractérisé en ce que** le système et plus particulièrement la cafetière napolitaine (1) est prévu(e) avec une bague d'étanchéité (38) entre une partie de la cafetière napolitaine (1) qui est raccordée avec le filtre de sortie (18) de la cafetière napolitaine et le réservoir de café (4) de sorte que la deuxième chambre (6) est fermée à l'aide du filtre de sortie (18) et, à l'usage, un liquide peut sortir de la deuxième chambre (6) uniquement via le filtre de sortie (18).

17. Système selon la revendication 16, **caractérisé en ce que** la capsule de café (40) vient en butée de manière étanche contre la bague d'étanchéité (38) pour obtenir ledit joint d'étanchéité au fluide, en particulier, moyennant quoi la capsule de café (40), **en ce qu'**elle est bloquée, forme un joint d'étanchéité convenable avec la bague d'étanchéité (38).

18. Système selon la revendication 17, **caractérisé en ce que** la paroi supérieure (50) de la capsule de café (40) vient en butée de manière étanche contre la bague d'étanchéité (38) pour obtenir ledit joint d'étanchéité au fluide.

19. Système selon l'une quelconque des revendications précédentes, **caractérisé en ce que** la cafetière napolitaine (1) est munie d'une seconde colonne montante (22) qui s'étend à partir d'une quatrième chambre (24) située du côté de la sortie du filtre de sortie (18) de la cafetière napolitaine (1), dans la troisième chambre (10) et jusqu'à proximité d'une partie supérieure de la troisième chambre, dans lequel la quatrième chambre (24) et la seconde colonne montante (22) font partie du raccordement de fluide (20) qui s'étend à partir de la deuxième chambre (6) jusqu'à la troisième chambre (10).

20. Système selon l'une quelconque des revendications précédentes, **caractérisé en ce que** la cafetière napolitaine (1) est munie d'un premier et un second logement partiel (28, 30) qui sont raccordés de manière détachable entre eux, dans lequel le premier logement partiel (28) comprend la première chambre (2) et le second logement partiel (30) comprend la troisième chambre (10) et dans lequel le filtre de sortie (18) de la cafetière napolitaine (1) est raccordé avec le second logement partiel (30) et dans lequel le réservoir de café (4) est inclus de manière amovible dans le première logement partiel (28).

21. Système selon les revendications 19 et 20, **caractérisé en ce que** la quatrième chambre (24) et la seconde colonne montante (22) sont situées dans le second logement partiel (30).

22. Système selon l'une quelconque des revendications précédentes, **caractérisé en ce que** le système est prévu avec au moins un premier type de cafetière napolitaine (1) et au moins un second type de cafetière napolitaine (1) qui, par exemple, sont chacun agencés pour recevoir une quantité maximum de café moulu pour préparer un même nombre de tasses de café, alors que la longueur de la deuxième chambre (6) du premier type de cafetière napolitaine est supérieure à la longueur de la deuxième chambre (6) du second type de cafetière napolitaine, dans lequel la capsule de café (40) peut à la fois être reçue par blocage dans la deuxième chambre (6) du premier type de cafetière napolitaine et être reçue par blocage dans la deuxième chambre (6) du second type de cafetière napolitaine.

23. Système selon l'une quelconque des revendications précédentes, **caractérisé en ce que** dans la deuxième chambre (6), une quantité maximum de café moulu qui peut être reçue, est prévue pour un nombre prédéterminé de tasses de café, dans lequel dans la capsule de café (40), une quantité de café moulé (48) qui est reçue, est prévue pour le nombre prédéterminé de tasses de café.

24. Système selon l'une quelconque des revendications précédentes, **caractérisé en ce que** la quantité de café moulu (48) incluse dans la capsule de café (40) est approximativement égale à la quantité maximum qui peut être reçue dans la deuxième chambre (6).

25. Système selon l'une quelconque des revendications précédentes, **caractérisé en ce que** la capsule de café (40) est prévue avec 10-17 grammes de café moulu pour préparer approximativement trois tasses de café ou **en ce que** la capsule de café est prévue avec 19-27 grammes de café moulu pour préparer approximativement six tasses de café ou **en ce que** la capsule de café est prévue avec 29-39 grammes de café moulu pour préparer approximativement neuf tasses de café ou **en ce que** la capsule de café est prévue avec 42-53 grammes de café moulu pour préparer approximativement douze tasses de café.

26. Procédé pour préparer une boisson de café, dans lequel on utilise une cafetière napolitaine (1) qui est munie d'une première chambre (2) pour recevoir de l'eau et un réservoir de café (4) muni d'une deuxième chambre (6) pour recevoir une quantité de café moulu, dans lequel dans la deuxième chambre (6), on reçoit une quantité maximum de café moulu qui est prévue pour préparer plusieurs tasses de café, en particulier au moins deux tasses de café et plus particulièrement au moins trois tasses de café, et munie d'un filtre d'entrée (8) qui forme une barrière au café moulu et qui peut laisser passer un liquide, dans lequel la cafetière napolitaine est en outre munie d'une troisième chambre (10) pour recevoir la boisson de café, une première colonne montante (16) pour amener de l'eau chaude de la première chambre (2) via le filtre d'entrée (8) à la deuxième chambre (6), un filtre de sortie (18) qui forme une barrière au café moulu et qui peut laisser passer un liquide et à l'aide duquel la deuxième chambre, à l'usage, est fermée, et un raccordement de fluide (20) qui s'étend à partir de la deuxième chambre (6) jusqu'à la troisième chambre (10) et qui comprend le filtre de sortie (18) pour amener l'extrait de café de la deuxième chambre (6) via le filtre de sortie à la troisième chambre (10), et dans lequel la deuxième chambre (6) peut être ouverte pour amener le café moulu dans la deuxième chambre (6), dans lequel on utilise une capsule de café (40) qui comprend un espace de café (64) qui est rempli avec une quantité de café moulu (48), dans lequel de préférence la quantité de café moulu (48) est prévue pour préparer au moins trois tasses de café et dans lequel la capsule de café (40) est munie d'une paroi latérale droite (42), un fond (44) qui est muni d'un filtre d'entrée (46) qui forme une barrière au café moulu (48) et peut laisser passer un liquide, et une paroi supérieure (50) qui est munie d'un filtre de sortie (52) qui forme une barrière au café moulu (48) et peut laisser passer un liquide, dans lequel à l'usage, les étapes de procédé suivantes sont réalisées:
la deuxième chambre (6) est ouverte;
la capsule de café (40) est incluse dans la deuxième chambre (6);
l'eau est incluses dans la première chambre (2);
la deuxième chambre (6) est fermée à l'aide du filtre de sortie (18),
l'eau dans la première chambre (2) est chauffée de sorte que l'eau s'écoule de la première chambre (2) en passant par le filtre d'entrée (8) de la deuxième chambre (6), s'écoule par le filtre d'entrée (46) de la capsule de café, s'écoule à travers le café moulu (48) de sorte que l'extrait de café est formé, dans lequel l'extrait de café s'écoule via le filtre de sortie (52) et le filtre de sortie (18) et le raccordement de fluide (20) jusqu'à la troisième chambre (10), **caractérisé en ce que** la capsule de café (40) est conçue de sorte qu'une distance entre le fond (44) et la paroi supérieure (50) de la capsule de café (40) peut être réduite en comprimant le fond (44) et la paroi supérieure (50) l'un vers l'autre, et dans lequel la distance entre la paroi supérieure (50) et le fond (44) de la capsule de café (40) avant qu'elle ne soit placée dans la cafetière napolitaine (1), est supérieure à une longueur de la deuxième chambre (6) dans une direction allant du filtre d'entrée (8) de la cafetière napolitaine (1) au filtre de sortie (18) de la cafetière napolitaine (1), dans lequel les étapes de procédé suivantes sont réalisées:
la capsule de café (40) est incluse dans la deuxième chambre (6) de sorte que la paroi supérieure (50) de la capsule de café (40) est située à proximité du filtre de sortie (18) de la cafetière napolitaine (1) et le fond (44) de la capsule de café (40) est située à proximité du filtre d'entrée de la cafetière napolitaine (1);
la deuxième chambre (6) est fermée à l'aide du filtre de sortie (18), dans lequel la capsule de café (40) dans la deuxième chambre (6) est bloquée entre le filtre d'entrée (8) et le filtre de sortie (18) de la cafetière napolitaine (1) alors que la distance entre la paroi supérieure (50) et le fond (44) de la capsule de café (40) diminue ainsi et dans lequel en particulier par le biais du serrage, entre la capsule de café (40) et la cafetière napolitaine (1), plus particulièrement entre la paroi supérieure (50) de la capsule de café (40) et la cafetière napolitaine (1), un joint d'étanchéité au fluide est formé, **en ce que** la capsule de café (40) est agencée de sorte que la paroi latérale droite (42) peut être déformée pour réduire ladite distance, **en ce que** la déformation de la paroi latérale droite (42) entraîne le serrage, **en ce que** la paroi latérale droite (42) est fabriquée à partir d'un matière rigide ou semi-rigide, **en ce que** l'espace de café (64) avant que la capsule de café (40) ne soit placée dans la deuxième chambre (6) de la cafetière napolitaine (1) n'est que partiellement remplie avec le café moulu (48) de sorte que la distance entre la hauteur de paroi supérieure (50) et le fond de la capsule de café (40) et par conséquent le volume de l'espace de café (64), peut être réduite pour placer la capsule de café (40) dans la deuxième chambre (6) et **en ce que** la paroi latérale droite (42) de la capsule de café (40) est prévue avec au moins une zone affaiblie (54) de sorte que par le biais de la déformation de la zone affaiblie (54), ladite distance peut diminuer.

27. Procédé selon la revendication 26, **caractérisé en ce que** le joint d'étanchéité au fluide est formé à l'aide d'une bague d'étanchéité (38) de la cafetière napolitaine (1), laquelle bague d'étanchéité (38) forme un joint d'étanchéité au fluide entre une partie de la cafetière napolitaine (1) qui est raccordée avec le filtre de sortie (18) de la cafetière napolitaine (1) et le réservoir de café (4), de sorte qu'un liquide qui s'écoule via le filtre d'entrée (8) dans la deuxième chambre (6) peut sortir de la deuxième chambre (6) uniquement via le filtre de sortie (18) à la fois lorsqu'il n'y a pas de capsule de café (40) dans la deuxième chambre (6) et également lorsqu'il y a une capsule de café (40) dans la deuxième chambre (6).
